# FASCICULE DE BREVET EUROPEEN

(11) **EP 1 922 243 B1**
(45) Date de publication et mention de la délivrance du brevet: **04.08.2010**
(21) Numéro de dépôt: 06794386.0
(22) Date de dépôt: 04.09.2006
(51) Int. Cl.: B62D 65/14, B62D 25/14

(54) **PROCEDE D'ASSEMBLAGE D'UNE TRAVERSE ET D'UNE PLANCHE DE BORD, ET DISPOSITIF DE CENTRAGE**
VERFAHREN ZUR MONTAGE EINES QUERGLIEDS UND EINES ARMATURENBRETTS UND ZENTRIERVORRICHTUNG
METHOD FOR ASSEMBLING A CROSS-MEMBER AND AN INSTRUMENT PANEL, AND CENTERING DEVICE

(30) Priorité: 06.09.2005 FR 0509091
(43) Date de publication de la demande: 21.05.2008
(73) Titulaire: Faurecia Interieur Industrie, 92000 Nanterre (FR)
(72) Inventeur: BAUDART, Laurent, F-60530 Fresnoy en Thelle (FR); DESCAMPS, Albin, F-27140 Gisors (FR)
(74) Mandataire: Domenego, Bertrand
(86) Numéro de dépôt international: PCT/FR2006/002030
(87) Numéro de publication internationale: WO 2007/028884

(56) Documents cités:
- EP-A- 0 296 961
- EP-A- 0 694 465
- DE-A1- 4 134 436
- DE-A1- 19 739 870

## Description

La présente invention concerne un procédé d'assemblage d'une traverse aéraulique et d'une planche de bord, ainsi qu'un dispositif de centrage adapté à la mise en oeuvre du procédé. Le document DE 4134436 décrit un procédé selon le préambule de la revendication 1.

La partie avant du compartiment des passagers d'une automobile est délimitée par une planche de bord habituellement montée sur une traverse, le plus souvent au moins partiellement métallique et constituant un élément de la structure du véhicule. L'ensemble constitué par la traverse et la planche de bord forme ce qu'on appelle parfois un "cockpit" et a de très nombreuses fonctions, en plus de la fonction mécanique structurelle, telles que le support d'éléments aérauliques, tels que des conduits d'air de conditionnement, de sacs gonflables, de la colonne de direction, etc.

A cause de sa fonction mécanique, la traverse comprend en général une partie au moins métallique destinée à encaisser les efforts, et elle délimite aussi des espaces de circulation d'air. Cependant, il est souhaitable que l'air de conditionnement ne soit pas transmis directement par ces espaces ; en effet, comme les métaux possèdent une conductibilité thermique élevée, la traverse métallique provoque une déperdition calorifique importante. Il est donc avantageux de placer, dans les espaces délimités à l'intérieur de la traverse métallique, des éléments aérauliques, en général formés de matière plastique dont la conductibilité thermique est faible.

On peut réaliser la traverse métallique par cintrage longitudinal d'une bande métallique afin qu'elle délimite des canaux ouverts ou fermés, pouvant loger des éléments aérauliques et maintenir des supports d'autres éléments, par exemple de sacs gonflables.

Lors de l'utilisation d'une telle traverse dans un cockpit, les trappes de passage des sacs gonflables qui sont délimitées dans la planche de bord doivent être bien alignées sur les supports de sacs gonflables portés par la traverse. Il est donc essentiel que, dans un cockpit, la planche de bord et la traverse métallique soient alignées en position convenable.

Pour cette raison, dans un cockpit, la planche de bord et la traverse sont "centrées" par au moins un dispositif, qui peut être sous forme d'un téton d'un des éléments entrant dans un orifice de l'autre des éléments. Pour des raisons de réduction des plages de tolérances de fabrication, le dispositif de centrage est de préférence placé à peu près au milieu de la longueur de la traverse, et donc du cockpit.

Le document DE-197 39 870 décrit un tel dispositif de centrage qui est fixé à un support par un boulon. Le dispositif est soit absent, soit présent en totalité.

L'assemblage d'un cockpit comprend donc normalement d'abord l'assemblage d'éléments aérauliques sur une traverse métallique, puis l'assemblage de la planche de bord sur la traverse. Cependant, l'assemblage des éléments aérauliques nécessite un déplacement d'éléments aérauliques de matière plastique dans la direction longitudinale de la traverse métallique, contre celle-ci. On conçoit que la présence d'un dispositif de centrage en saillie empêche ou au moins gêne cet assemblage des éléments aérauliques.

On peut donc envisager de placer le dispositif de centrage sur la traverse après le montage des éléments aérauliques. Cependant, cette opération de fixation du dispositif de centrage, essentiellement par soudage, n'est plus possible lorsque des éléments thermiquement fragiles constitués de matière plastique ont déjà été montés sur la traverse.

On peut aussi envisager de fixer ultérieurement le dispositif de centrage par fixation par vissage sur la traverse. Cependant, une telle fixation par simple vissage sur la traverse, compte tenu de la configuration et de la fonction mécanique de celle-ci, n'est pas souhaitable le plus souvent au moins pour des raisons de précision de positionnement ou de résistance mécanique de la traverse.

L'invention concerne la solution de ce problème qui se pose dans le cas particulier de l'assemblage d'une planche de bord sur une traverse aéraulique lorsque celle-ci est construite par déplacement longitudinal d'éléments aérauliques par rapport à une traverse métallique.

Selon l'invention, ce problème est résolu par utilisation d'un dispositif de centrage qui comporte au moins un dispositif de centrage constitué de deux parties, une base destinée à être fixée fermement à la traverse métallique, de préférence par soudage, et un corps de dispositif de centrage qui est positionné avec précision sur la base de dispositif de centrage. Le dispositif de centrage ou téton ainsi formé permet ensuite un assemblage simple et robuste de la planche de bord sur la traverse, avec un alignement très précis.

Plus précisément, l'invention concerne un procédé d'assemblage d'une traverse aéraulique allongée et d'une planche de bord, par déplacement relatif de la traverse et de la planche de bord dans une première direction sensiblement perpendiculaire à la longueur de la traverse, afin qu'au moins un dispositif de centrage de la traverse pénètre dans un orifice de la planche de bord dans la première direction, le procédé étant du type qui comprend
- une opération d'assemblage d'au moins un élément aéraulique sur une traverse métallique, par déplacement dans au moins une direction sensiblement transversale à ladite première direction, et
- une opération d'assemblage de la planche de bord sur la traverse par déplacement de la planche de bord dans la première direction afin que le dispositif de centrage pénètre dans l'orifice.

Selon l'invention, le procédé comprend en outre :
- avant l'opération d'assemblage des éléments aérauliques sur la traverse métallique, la disposition sur la traverse métallique d'une base de dispositif de centrage de hauteur suffisamment réduite pour qu'elle ne gêne pas l'opération d'assemblage des éléments aérauliques sur la traverse métallique, et,
- après l'opération d'assemblage des éléments aérauliques sur la traverse métallique et avant l'opération d'assemblage de la planche de bord sur la traverse, la disposition, sur la base du dispositif de centrage, d'un corps de dispositif de centrage afin que la base et le corps de dispositif de centrage soient fixés mutuellement.

De préférence, la disposition de la base de dispositif de centrage sur la traverse métallique est réalisée par une opération de soudage.

Dans un mode d'exécution, le procédé comprend en outre, avant l'assemblage des éléments aérauliques, la fabrication de la traverse par cintrage longitudinal d'une bande métallique au moins. De préférence, le procédé comprend en outre une opération de soudage localisé de la bande métallique sur elle-même.

L'invention concerne aussi un dispositif de centrage en deux parties pour la mise en oeuvre d'un procédé d'assemblage selon l'un des paragraphes précédents, qui comporte une base de dispositif de centrage, de hauteur réduite et munie d'un premier dispositif de fixation, et un corps de dispositif de centrage muni d'un second dispositif de fixation, les premier et second dispositifs de fixation étant destinés à coopérer.

De préférence, le premier dispositif de fixation est un taraudage et le second est une vis de fixation.

De préférence, la base et le corps de dispositif de centrage coopèrent par des organes de centrage mutuel. Par exemple, les organes de centrage mutuel comprennent une saillie et une cavité, toutes deux de forme tronconique d'une même conicité.

D'autres caractéristiques et avantages de l'invention seront mieux compris à la lecture de la description qui va suivre d'un exemple de réalisation, faite en référence aux dessins annexés sur lesquels :
la figure 1 est une coupe éclatée d'un dispositif de centrage constituant un téton de centrage selon l'invention ;
les figures 2 à 5 illustrent le procédé selon l'invention, et, sur ces figures :

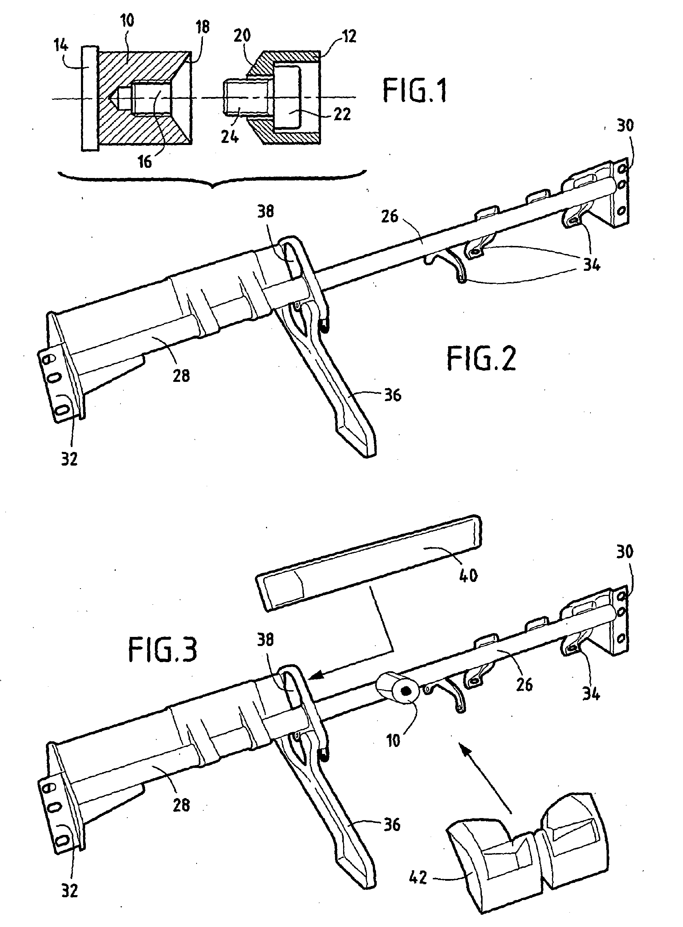

la figure 2 représente une traverse métallique avant l'assemblage d'éléments aérauliques et avant le montage de la base de téton ;
la figure 3 représente la traverse après fixation de la base de téton et lors du montage d'éléments aérauliques

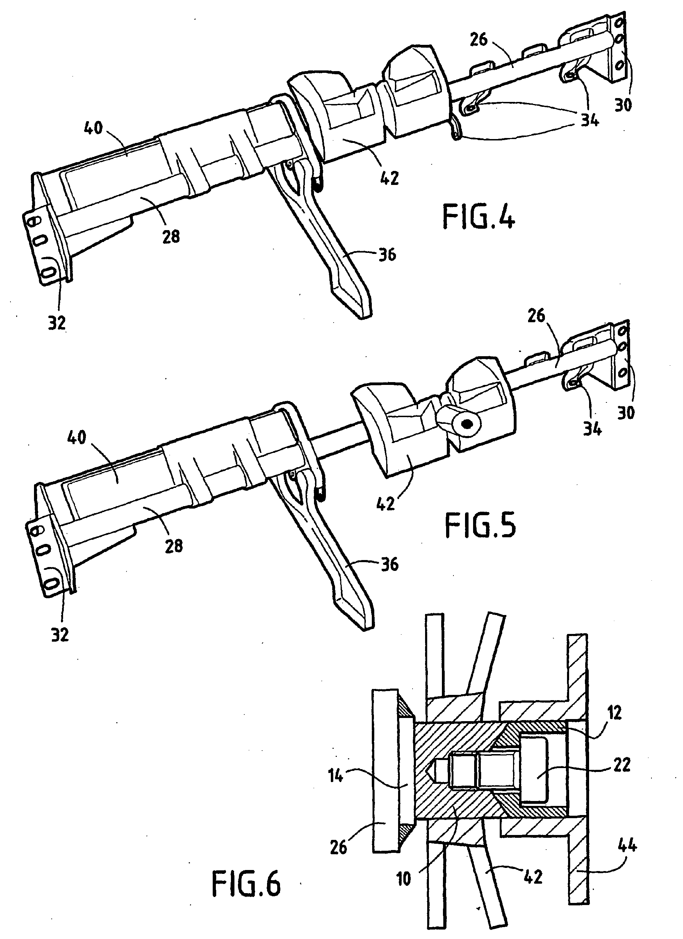

la figure 4 représente une traverse sur laquelle sont montés divers éléments, avant le montage final du corps de téton ; et
la figure 5 représente une traverse après le montage final du corps de téton ; et

la figure 6 est une coupe d'une partie de la figure 5, représentant la coopération de la planche de bord avec le téton.

La figure 1 est une coupe éclatée d'un dispositif de centrage selon l'invention. Il est constitué de deux parties, une base 10 de téton et un corps 12 de téton.

La base 10 de téton possède une partie 14 destinée à être fixée à une traverse, par exemple par soudage. Du côté opposé à la partie 14, la base 10 a un trou taraudé débouchant 16 placé au centre d'une cuvette 18 de centrage de forme tronconique.

Le corps 12 de téton a une saillie tronconique 20 de conicité pratiquement égale à celle de la cuvette conique 18, autour d'un trou dans lequel passe une vis 22 dont la tige filetée 24 peut se visser dans le trou taraudé 16.

Grâce à la forme tronconique de la cuvette 18 et de la saillie 20, le corps 12 de téton n'a qu'une seule position d'alignement sur la base 10, cette position donnant au dispositif de centrage une forme cylindrique sans discontinuité entre la base et le corps de téton.

On décrit maintenant le procédé d'assemblage d'un cockpit comprenant une traverse métallique et une planche de bord selon l'invention.

La figure 2 représente une traverse métallique dans un exemple de réalisation de l'invention. Dans cet exemple, la traverse comprend essentiellement, dans sa partie droite, un tube métallique 26 et, dans sa partie gauche, une partie de traverse 28 formée par cintrage longitudinal et soudage d'une bande métallique. Les extrémités de la traverse sont munies de supports 30 et 32 destinés à solidariser la traverse avec la structure du véhicule. La partie 26 de traverse porte divers supports 34, notamment de sacs gonflables, avantageusement fixés par soudage.

De préférence, un bras de retenue 36, placé à proximité de la partie centrale de la traverse, évite le flambage de celle-ci.

La partie gauche 28 de planche de bord, formée par cintrage d'une bande métallique, a diverses fonctions telles que le support de la colonne de direction et le logement d'éléments aérauliques. Dans le cas particulier considéré, une ouverture 38 formée au niveau du bras intermédiaire 36 est destinée au passage d'un élément aéraulique 40, qui constitue un conduit de circulation d'air de conditionnement.

On note sur la figure 3 que l'insertion de l'élément aéraulique 40 par l'ouverture 38 nécessite que la traverse soit dégagée dans sa partie placée à droite de cette ouverture afin que l'élément aéraulique puisse être présenté devant l'ouverture, puis déplacé dans la direction de la longueur de la traverse.

Avant ce montage des éléments aérauliques, selon le procédé de l'invention, la base de téton du dispositif de centrage 10 est soudée sur la partie droite de traverse 26 ; étant donné sa faible hauteur, elle ne constitue pas un obstacle à l'insertion des éléments aérauliques. D'autres éléments aérauliques, par exemple formant répartiteur, tel que l'élément 42, peuvent aussi être montés par déplacement dans une autre direction que la direction longitudinale de la traverse, comme illustré par les figures 3 et 4.

On note sur la figure 4 que la base 10 de téton n'est pratiquement pas en saillie par rapport à l'élément aéraulique 42. Le dispositif de centrage n'est donc pas accessible à une planche de bord qui doit être montée sur la traverse équipée représentée sur la figure 4.

Dans une opération postérieure, la base 10 de téton est munie du corps 12 de téton, comme illustré sur la figure 5. La figure 6 est une coupe agrandie de la partie de traverse passant par le centre du dispositif de centrage.

Comme l'indique clairement la figure 5, après que l'élément aéraulique 42 a été monté sur la traverse 26, autour de la base 10 de téton, le corps de téton 12 est vissé sur la base 10 et forme ainsi un dispositif de centrage sur lequel peut s'ajuster un cylindre de centrage d'une planche de bord, partiellement représentée et désignée par la référence 44.

Le procédé qu'on vient de décrire présente de nombreux avantages.

D'abord, la fixation robuste du dispositif de centrage est réalisée par soudage de la base de téton au moment de la fabrication des éléments métalliques, à un moment où il est possible d'obtenir une très bonne précision de positionnement et une très bonne résistance.

Grâce au centrage intégré du corps de téton sur la base de téton, le positionnement précis obtenu lors de la fabrication de la traverse métallique est conservé jusqu'à l'assemblage de la planche de bord.

Le dispositif de centrage peut être réalisé en un matériau métallique donnant une grande robustesse. Cependant, lorsque le dispositif de centrage n'a qu'une fonction de centrage, le corps de téton peut être formé autrement, par exemple par moulage d'une matière plastique.

Bien qu' on ait représenté le centrage mutuel de la base et du corps de téton par coopération de surfaces tronconiques, tout autre système de centrage peut être utilisé. Il est même possible d'utiliser la vis elle-même comme dispositif de centrage, la base et le corps de téton coopérant alors par des surfaces planes.

## Revendications

1. Procédé d'assemblage d'une traverse aéraulique allongée et d'une planche de bord, par déplacement relatif de la traverse et de la planche de bord dans une première direction sensiblement perpendiculaire à la longueur de la traverse, afin qu'au moins un dispositif de centrage de la traverse pénètre dans un orifice de la planche de bord dans la première direction, du type qui comprend
- une opération d'assemblage d'au moins un élément aéraulique (40, 42) sur une traverse métallique (26, 28), par déplacement dans au moins une direction sensiblement transversale à ladite première direction, et
- une opération d'assemblage de la planche de bord (44) sur la traverse (26, 28) par déplacement de la planche de bord (44) dans la première direction afin que le dispositif de centrage pénètre dans l'orifice,
**caractérisé en ce qu'**il comprend en outre :
- avant l'opération d'assemblage des éléments aérauliques (40, 42) sur la traverse métallique (26, 28), la disposition sur la traverse métallique (26, 28) d'une base (10) de dispositif de centrage de hauteur suffisamment réduite pour qu'elle ne gêne pas l'opération d'assemblage des éléments aérauliques (40, 42) sur la traverse métallique (26, 28), et
- après l'opération d'assemblage des éléments aérauliques (40, 42) sur la traverse métallique (26, 28) et avant l'opération d'assemblage de la planche de bord sur la traverse (26, 28), la disposition, sur la base (10) de dispositif de centrage, d'un corps (12) de dispositif de centrage afin que la base (10) et le corps (12) de dispositif de centrage soient fixés mutuellement.

2. Procédé selon la revendication 1, **caractérisé en ce que** la disposition de la base (10) du dispositif de centrage sur la traverse métallique (26, 28) est réalisée par une opération de soudage.

3. Procédé selon l'une des revendications 1 et 2, **caractérisé en ce qu'**il comprend en outre, avant l'assemblage des éléments aérauliques (40, 42), la fabrication de la traverse (28) par cintrage longitudinal d'une bande métallique au moins.

4. Procédé selon la revendication 3 , **caractérisé en ce qu'**il comprend en outre une opération de soudage localisé de la bande métallique sur elle-même.

5. Dispositif de centrage en deux parties pour la mise en oeuvre d'un procédé d'assemblage selon l'une quelconque des revendications précédentes, comportant une base (10) de dispositif de centrage, de hauteur réduite et munie d'un premier dispositif de fixation (16), et un corps (12) de dispositif de centrage muni d'un second dispositif de fixation (22), les premier et second dispositifs de fixation (16, 22) étant destinés à coopérer, **caractérisé en ce que** la base (10) et le corps (12) de dispositif de centrage coopèrent par des organes (18, 20) de centrage mutuel, **en ce que** les organes de centrage mutuel comprennent une saillie (20) et une cavité (18), toutes deux de forme tronconique d'une même conicité, et **en ce que** le corps (12) de dispositif de centrage fixé sur la base (10) de dispositif de centrage donne au dispositif de centrage une forme cylindrique sans discontinuité entre la base (10) et le corps (12) de dispositif de centrage.

6. Dispositif selon la revendication 5, **caractérisé en ce que** le premier dispositif de fixation (16) est un taraudage et le second est une vis de fixation (22).

## Claims

1. Method of assembling an aeraulic cross-member and an instrument panel by relative displacement of the cross-member and the instrument panel in a first direction substantially perpendicular to the length of the cross-member so that at least one centring device for the cross-member engages in an orifice in the instrument panel in the first direction, of the type comprising
- an operation of assembling at least one aeraulic element (40, 42) on a metal cross-member (26, 28) by displacement in at least one direction substantially transverse to said first direction, and
- an operation of assembling the instrument panel (44) on the cross-member (26, 28) by displacement of the instrument panel (44) in the first direction so that the centring device engages in the orifice,
**characterised in that** it further comprises:
- prior to the operation of assembling the aeraulic elements (40, 42) on the metal cross-member (26, 28), arranging on the metal cross-member (26, 28) a centring device base (10) which is of sufficiently small height that it does not interfere with the operation of assembling the aeraulic elements (40, 42) on the metal cross-member (26, 28), and
- after the operation of assembling the aeraulic elements (40, 42) on the metal cross-member (26, 28) and prior to the operation of assembling the instrument panel on the cross-member (26, 28), arranging, on the centring device base (10), a centring device body (12) so that the centring device base (10) and body (12) are mutually fixed.

2. Method according to claim 1, **characterised in that** the arrangement of the centring device base (10) on the metal cross-member (26, 28) is carried out by a welding operation.

3. Method according to either claim 1 or claim 2, **characterised in that** it further comprises, prior to the assembly of the aeraulic elements (40, 42), the production of the cross-member (28) by longitudinal bending of at least one metal strip.

4. Method according to claim 3, **characterised in that** it further comprises an operation of localised welding of the metal strip to itself.

5. Two-part centring device for carrying out an assembly method according to any one of the preceding claims, comprising a centring device base (10), which is of small height and is provided with a first fixing device (16), and a centring device body (12) provided with a second fixing device (22), the first and second fixing devices (16, 22) being arranged to co-operate, **characterised in that** the centring device base (10) and the centring device body (12) co-operate by means of mutual centring members (18, 20), **in that** the mutual centring members comprise a projection (20) and a cavity (18), both being of tapered shape with the same taper, and **in that** the centring device body (12) fixed to the centring device base (10) gives the centring device a cylindrical shape without any discontinuity between the centring device base (10) and the centring device body (12).

6. Device according to claim 5, **characterised in that** the first fixing device (16) is an internal screw thread and the second is a fixing screw (22).

## Patentansprüche

1. Verfahren zur Montage eines länglichen lufttechnischen Querglieds und eines Armaturenbretts durch relatives Verschieben des Querglieds und des Armaturenbretts in einer ersten Richtung im Wesentlichen senkrecht zur Länge des Querglieds, so dass wenigstens eine Zentriervorrichtung des Querglieds in eine Öffnung des Armaturenbretts in der ersten Richtung eindringt, von der Art, die Folgendes umfasst:
- einen Vorgang zur Montage von wenigstens einem lufttechnischen Element (40, 42) auf einem metallischen Querglied (26, 28) durch Verschieben in wenigstens einer Richtung im Wesentlichen transversal zu der genannten ersten Richtung, und
- einen Vorgang zur Montage des Armaturenbretts (44) auf dem Querglied (26, 28) durch Verschieben des Armaturenbretts (44) in der ersten Richtung, so dass die Zentriervorrichtung in die Öffnung eindringt,
**dadurch gekennzeichnet, dass** es darüber hinaus Folgendes beinhaltet:
- Anordnen, vor dem Vorgang zur Montage der lufttechnischen Elemente (40, 42) auf dem metallischen Querglied (26, 28), einer Basis (10) der Zentriervorrichtung auf dem metallischen Querglied (26, 28) mit einer ausreichend begrenzten Höhe, so dass der Vorgang des Montierens der lufttechnischen Elemente (40, 42) auf dem metallischen Querglied (26, 28) nicht gestört wird, und
- Anordnen, nach dem Vorgang zur Montage der lufttechnischen Elemente (40, 42) auf dem metallischen Querglied (26, 28) und vor dem Vorgang zur Montage des Armaturenbretts auf dem Querglied (26, 28), eines Körpers (12) der Zentriervorrichtung auf der Basis (10) der Zentralvorrichtung, so dass die Basis (10) und der Körper (12) der Zentriervorrichtung aneinander befestigt sind.

2. Verfahren nach Anspruch 1, **dadurch gekennzeichnet, dass** das Anordnen der Basis (10) der Zentriervorrichtung auf dem metallischen Querglied (26, 28) durch einen Schweißvorgang erfolgt.

3. Verfahren nach einem der Ansprüche 1 und 2, **dadurch gekennzeichnet, dass** es ferner die Herstellung, vor dem Montieren der lufttechnischen Elemente (40, 42), des Querglieds (28) durch Längsbiegung von wenigstens einem Metallband beinhaltet.

4. Verfahren nach Anspruch 3, **dadurch gekennzeichnet, dass** es ferner einen lokalisierten Schweißvorgang des Metallbands auf sich selbst beinhaltet.

5. Zweiteilige Zentriervorrichtung zum Ausführen eines Verfahrens zur Montage nach einem der vorherigen Ansprüche, die eine Basis (10) der Zentriervorrichtung einer reduzierten Höhe, die mit einer ersten Befestigungsvorrichtung (16) ausgestattet ist, und einen Körper (12) der Zentriervorrichtung, der mit einer zweiten Befestigungsvorrichtung (22) ausgestattet ist umfasst, wobei die erste und die zweite Befestigungsvorrichtung (16, 22) zum Zusammenwirken bestimmt sind,
**dadurch gekennzeichnet, dass** die Basis (10) und der Körper (12) der Zentriervorrichtung über gegenseitige Zentriermittel (18, 20) zusammenwirken,
**dadurch**, dass die gegenseitigen Zentriermittel einen Vorsprung (20) und einen Hohlraum (18) umfassen, beide kegelstumpfförmig mit derselben Konizität, und
**dadurch**, dass der an der Basis (10) der Zentriervorrichtung befestigte Körper (12) der Zentriervorrichtung eine zylindrische Form ohne Diskontinuität zwischen der Basis (10) und dem Körper (12) der Zentriervorrichtung verleiht.

6. Verfahren nach Anspruch 5, **dadurch gekennzeichnet, dass** die erste Befestigungsvorrichtung (16) ein Innengewinde und die zweite eine Befestigungsschraube (22) ist.
